(19) Europäisches Patentamt
European Patent Office
Office européen des brevets

(11) EP 3 120 406 B1

(12) FASCICULE DE BREVET EUROPEEN

(45) Date de publication et mention de la délivrance du brevet:
**22.11.2017 Bulletin 2017/47**

(21) Numéro de dépôt: **15715334.7**

(22) Date de dépôt: **26.02.2015**

(51) Int Cl.:
***H01M 8/1004*** *(2016.01)* ***H01M 4/88*** *(2006.01)*
*H01M 10/39* *(2006.01)*

(86) Numéro de dépôt international:
**PCT/FR2015/050462**

(87) Numéro de publication internationale:
**WO 2015/140434 (24.09.2015 Gazette 2015/38)**

# (54) ASSEMBLAGE MEMBRANE-ELECTRODES POUR PEMFC ET PROCEDE DE FABRICATION

MEMBRANELEKTRODENANORDNUNG FÜR PROTONENAUSTAUSCHMEMBRANBRENNSTOFFZELLEN UND HERSTELLUNGSVERFAHREN

MEMBRANE-ELECTRODES ASSEMBLY FOR PROTON EXCHANGE MEMBRANE FUEL CELLS (PEMFC), AND MANUFACTURING METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **21.03.2014 FR 1452396**

(43) Date de publication de la demande:
**25.01.2017 Bulletin 2017/04**

(73) Titulaire: **Commissariat à l'Énergie Atomique et aux Énergies Alternatives
75015 Paris (FR)**

(72) Inventeurs:
- **VINCENT, Rémi
38000 Grenoble (FR)**
- **TARD, Julien
38070 Saint Quentin Fallavier (FR)**
- **TREMBLAY, Denis
38340 Pommiers-la-Placette (FR)**

(74) Mandataire: **Cabinet Laurent & Charras
Le Contemporain
50 Chemin de la Bruyère
69574 Dardilly Cedex (FR)**

(56) Documents cités:
**EP-A1- 2 618 414**
**US-A1- 2005 112 448**
**US-A1- 2008 107 945**
**US-A1- 2009 233 148**
**US-A1- 2012 100 463**

- **STASSI A ET AL: "Performance comparison of long and short-side chain perfluorosulfonic membranes for high temperature polymer electrolyte membrane fuel cell operation", JOURNAL OF POWER SOURCES, ELSEVIER SA, CH, vol. 196, no. 21, 17 décembre 2010 (2010-12-17), pages 8925-8930, XP028270187, ISSN: 0378-7753, DOI: 10.1016/J.JPOWSOUR.2010.12.084 [extrait le 2011-01-08]**
- **CHAO LEI ET AL: "Low equivalent weight short-side-chain perfluorosulfonic acid ionomers in fuel cell cathode catalyst layers", JOURNAL OF POWER SOURCES, ELSEVIER SA, CH, vol. 196, no. 15, 12 mars 2011 (2011-03-12), pages 6168-6176, XP028216007, ISSN: 0378-7753, DOI: 10.1016/J.JPOWSOUR.2011.03.024 [extrait le 2011-03-22]**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 3 120 406 B1

## Description

### DOMAINE DE L'INVENTION

La présente invention concerne un assemblage membrane-électrodes pour piles à combustible à membrane échangeuse de protons (PEMFC : acronyme anglo-saxon pour *« Proton Exchange Membrane Fuel Cell »*) présentant des propriétés (performances, durabilité, ...) améliorées.

Pour cela, une couche dite d'interface, à base d'un polymère conducteur protonique présentant une température de transition vitreuse inférieure à celle de la membrane, est disposée à l'interface de la membrane et de l'électrode. Ainsi, un assemblage réalisé à une température adaptée permet une bonne interface membrane-électrodes sans affecter l'intégrité de la membrane.

### ETAT ANTERIEUR DE LA TECHNIQUE

Le principe de fonctionnement d'une pile à combustible à membrane échangeuse de protons repose sur la conversion d'une énergie chimique en énergie électrique par réaction catalytique entre un combustible, par exemple de l'hydrogène, et un comburant, par exemple l'oxygène.

Les assemblages membrane-électrodes (AME), appelés communément coeurs de pile, constituent les éléments de base des PEMFC. Comme illustré à la figure 1, l'AME est généralement formée d'une membrane polymère (électrolyte, **3**) au contact d'une couche catalytique (électrodes, **2**) de part et d'autre. Les électrodes, appelées anode et cathode respectivement, sont donc séparées par l'électrolyte qui est un milieu isolant électronique, mais conducteur protonique. Des collecteurs de courant (**1**) assurent le transfert des électrons à la surface externe des électrodes. En outre, des couches de diffusion gazeuse ou GDL (acronyme anglo-saxon pour « *Gaz Diffusion Layer* ») sont disposées de part et d'autre de l'AME pour assurer la conduction électrique, la répartition homogène des gaz réactifs et l'évacuation de l'eau produite.

Dans le cas des piles à combustible à membrane échangeuse de protons, l'électrolyte est généralement une membrane constituée d'un polymère échangeur cationique, tel que le Nafoon® (Dupont) ou l'Aquivion® (Solvay).

Le combustible utilisé dans les piles à combustible à membrane échangeuse de protons peut être un gaz, comme l'hydrogène, ou un liquide comme par exemple un alcool, notamment l'éthanol, le méthanol ou encore l'éthylène glycol.

Les réactions suivantes, données à titre d'exemple, illustrent les réactions électrochimiques ayant lieu aux électrodes dans le cas où le combustible et le comburant sont respectivement l'hydrogène et l'oxygène :

Anode :

$$H_2 \rightarrow 2H^+ + 2e^- \qquad (1)$$

Cathode :

$$O_2 + 4H^+ + 4e^- \rightarrow 2H_2O \qquad (2)$$

$$E°_{anode} = 0\ V_{/ENH}$$

$$E°_{cathode} = 1{,}23\ V_{/ENH}$$

Dans ce cas, la réaction globale est donc la suivante :

$$H_2 + \tfrac{1}{2}\, O_2 \rightarrow H_2O$$

$$E°_{eq} = E°_{cathode} - E°_{anode} = 1{,}23\ V$$

La force électromotrice aux bornes de la pile est donc de 1,23 V dans les conditions standards.

A l'anode, la décomposition de l'hydrogène adsorbé sur le catalyseur produit des protons $H^+$ et des électrons $e^-$. Les protons traversent ensuite la membrane polymérique avant de réagir avec l'oxygène à la cathode. La réaction des protons avec l'oxygène à la cathode conduit à la formation d'eau et à la production de chaleur.

Ces réactions électrochimiques sont cinétiquement favorisées par la présence d'un catalyseur constituant les électrodes. Plusieurs matériaux peuvent être utilisés selon le type de réaction et de combustible, mais le platine s'avère être le catalyseur le plus efficace pour la plupart des réactions et des combustibles.

Comme déjà indiqué, le catalyseur peut se présenter sous la forme de couches catalytiques, qui sont généralement réalisées de nanoparticules de platine supportées sur des agrégats de carbone. Le catalyseur peut être uniformément déposé à l'aide d'une encre catalytique sur la surface de la membrane ou sur la couche de diffusion. Cette encre catalytique est composée notamment du catalyseur supporté sur du carbone (carbone platiné), un liquide porteur et un polymère conducteur protonique. Ce dernier est en général de même nature que l'électrolyte.

Le polymère conducteur protonique joue principalement un rôle dans les performances de la cellule, puisque c'est lui qui détermine la conductivité protonique de la cellule. Il s'agit d'un ionomère, c'est-à-dire d'un polymère possédant un groupe ionisé permettant le transport de charges.

Initialement, ces ionomères étaient des phénols sulfonés, puis des polymères polystyrène sulfonique acide, plus résistants mécaniquement. Aujourd'hui, les matériaux acide perfluorosulfoné ou acide sulfonique perfluoré (PFSA pour « *PerFluro Sulfonic Acid* ») sont largement utilisés dans les piles à combustible actuelles, en raison de leurs bonnes résistances chimique et mécanique.

Les PFSA sont des ionomères dérivés de l'acide perfluorosulfoné, c'est-à-dire comprenant des groupements sulfonates $SO_3^-$. En outre, il s'agit de polymères fluorés.

Cette famille d'ionomères regroupe un certain nombre de composés, qui diffèrent par une chimie légèrement différente. Des matériaux PFSA sont commercialisés sous les noms de Nafion® (Dupont), Aquivion® (Solvay), Flemion® (Asahi Glass Company) ou encore Aciplex® (Asahi Chemical Company).

Ces polymères diffèrent essentiellement par la structure chimique de leurs chaînes latérales ou pendantes, à savoir les chaînes greffées sur la chaîne principale du polymère (ou ramifications).

Ainsi, les chaînes latérales ou pendantes de l'Aquivion® sont plus courtes (« *short side-chain* ») que celles du Nafion® (« *long side-chain* »). Cela se traduit par un taux de cristallinité et une température de transition vitreuse plus élevés.

Les performances des AME, mais également leur durabilité, sont déterminantes pour la commercialisation de ces dispositifs. Toutefois, ces AME, généralement empilés ou montés en « *stack* », sont soumis à des dégradations chimiques et mécaniques.

En termes de performances, la tendance est à l'utilisation de membranes de plus en plus fines afin d'augmenter la conductivité protonique. Toutefois, ceci s'accompagne d'une baisse de la durabilité en raison d'une fragilité mécanique de ces membranes. Ainsi, les membranes sont généralement renforcées, par exemple par du polytetrafluoroéthylène. Les AME peuvent également être renforcés par des films polymère placés de part et d'autre de la membrane. Des solutions techniques encore plus élaborées ont été proposées : A titre d'exemple, le document US 2013/0130133 décrit une membrane multicouche, avec une couche renforcé à base de catalyseurs supportés sur nanofibres. Le document US 2011/0097642 propose, quant à lui, une membrane à base de PFSA et d'un polymère dit « basique ». Toutefois, ces solutions ont pour inconvénients d'augmenter le coût de réalisation.

Par ailleurs, les AME sont généralement assemblés sous presse chauffante. La montée en température au-dessus de la température de transition vitreuse du polymère conducteur protonique présent dans la membrane et les électrodes permet son ramollissement, alors que la mise sous pression permet une interpénétration et favorise une bonne interface entre membrane et électrodes. Pour cela, il est recommandé de traiter thermiquement l'AME à une température 40°C supérieure à la température de transition vitreuse du polymère en présence. Dans ces conditions, le polymère de l'électrolyte se ramollit et favorise un meilleur contact avec les électrodes, conduisant à un transfert plus important de protons entre les électrodes, ce qui permet d'améliorer les performances de la cellule électrochimique contenant l'AME.

Des conditions typiques d'assemblage ont été décrites dans le document Electrochemical Science and Technology (J. Electrochem. Soc., 1988, 135, 9, p: 2209), à savoir un préchauffage de la presse à 100°C, la disposition de l'assemblage entre les deux plaques de la presse, la montée de la température à 120-176° C et l'application d'une pression à 50-60 atm pour 30-40s.

Toutefois, les auteurs de la publication « Effects of MEA fabrication method on durability of polymer electrolyte membrane fuel cells » (Volume 53, Issue 16, 30 June 2008, Pages 5434-5441) ont montré que l'assemblage sous presse chauffante détériore la durabilité : un AME assemblé sous presse chauffante (140°C, 200 $kg.cm^{-2}$, 1mn30) présente une dégradation plus importante et est donc moins durable qu'un AME non assemblé.

Ainsi, le ramollissement de l'électrolyte a pour inconvénient de diminuer sa résistante mécanique. De ce fait, une pression trop importante ou une mauvaise manipulation lors de son assemblage avec les électrodes peut entraîner son percement ou son déchirement, engendrant une dégradation des performances et un vieillissement prématuré de

la cellule électrochimique. Les conditions d'assemblage actuelles sont donc un compromis entre la formation d'une bonne interface membranes-électrodes, et des sollicitations thermiques et mécaniques les plus faibles possibles pour préserver l'intégrité de la membrane.

Afin de minimiser les risques de déchirures de l'électrolyte lors de son assemblage, le document EP 2 463 866 propose un procédé d'assemblage à faible pression, qui est toutefois délicat à mettre en oeuvre. Le document KR 2013/0017496 propose, quant à lui, une compression asymétrique de l'AME lors du montage en pile, avec un taux de compression préconisé plus faible côté cathode que côté anode. Le document EP2618414 propose un assemblage membrane-électrode comprenant une membrane,deux électrodes et une couche d'adhésion à l'interface de la membrane et d'une électrode. Ainsi, il existe un besoin évident de nouvelles solutions techniques permettant de préserver l'intégrité de la membrane lors de son assemblage en AME.

## EXPOSE DE L'INVENTION

La présente invention concerne un assemblage membrane-électrodes, couramment appelé AME, dont les propriétés (performances, durabilité, ....) sont améliorés grâce à la présence d'une couche d'interface entre membrane et électrodes, à base d'un polymère conducteur protonique possédant une température de transition vitreuse inférieure ou égale à celle du polymère conducteur protonique de la membrane. Ainsi, lors de la montée en température et de la compression, cette couche « fond » et pénètre dans les électrodes poreuses, assurant ainsi une interface membrane-électrodes améliorée. La température appliquée au cours de l'assemblage est toutefois inférieure ou égale à la température de transition vitreuse du polymère conducteur protonique constitutif de la membrane, de sorte que l'intégrité de celle-ci n'est pas affectée.

Plus précisément, la présente invention concerne un assemblage membrane-électrodes comprenant classiquement une membrane et deux électrodes, à savoir une anode et une cathode respectivement selon la revendication 1. De manière caractéristique, ledit assemblage comprend en outre au moins une couche, située à l'interface de la membrane et d'au moins une électrode, contenant un polymère conducteur protonique qui présente une température de transition vitreuse (Tg) inférieure ou égale, avantageusement inférieure, à celle du polymère conducteur protonique contenu dans la membrane.

La transition vitreuse correspond à un changement d'état d'un polymère ou d'un matériau composite polymérisé, sous l'action de la température, et entraînant des variations importantes de ses propriétés mécaniques. La transition vitreuse, corrélée à la transition plastique, est caractérisée par une température de transition vitreuse (Tg pour « *glass temperature* »).

En dessous de cette température, le polymère est dit vitreux (état solide) et présente le comportement d'un corps solide élastique. Au-dessus de cette température, il présente un comportement de solide plastique (état viscoélastique), suite à l'affaiblissement de liaisons intermoléculaires (force de Van der Waals, ...). Ce changement d'état s'accompagne toujours d'une variation importante des propriétés physiques, notamment des propriétés mécaniques (chute du module d'élasticité par exemple).

De manière connue de l'homme du métier, de très nombreuses propriétés physiques (masse volumique, coefficient de dilatation, chaleur spécifique, constantes élastiques telles le module d'Young, viscosité, conductivité thermique, indice de réfraction, ...) peuvent varier de façon notable au voisinage de la $T_g$ et peuvent être utilisées pour sa mesure.

De manière préférentielle dans le cadre de la présente invention, la température de transition vitreuse ($T_g$) du polymère ou de la couche d'interface est déterminée par analyse mécanique dynamique (AMD) ou par analyse thermique, en particulier par calorimétrie différentielle à balayage (DSC pour « *Differential Scanning Calorimetry* »).

En d'autres termes, l'AME selon l'invention se présente sous la forme d'un multicouche comprenant au moins :

- une membrane électrolyte comprenant un polymère noté P3 ;
- deux électrodes comprenant un polymère qui peut être le même ou différent dans chacune des électrodes, noté P2a (pour l'anode) et P2c (pour la cathode). Selon un mode de réalisation privilégié, le polymère présent dans l'anode et la cathode est identique (P2) ;
- au moins une couche comprenant un polymère noté P4, ladite couche pouvant être située à l'interface entre membrane et anode et/ou entre membrane et cathode.

De manière générale, l'assemblage sous presse chauffante n'est pas problématique lorsque la température de transition vitreuse du polymère contenu dans la membrane est supérieure à celle du polymère contenu dans les électrodes, notamment lorsque la différence de Tg est supérieure ou égale à 40 °C. Ainsi, lorsque la membrane est réalisée en Aquivion® (Tg de l'ordre de 140 °C) et les électrodes en Nafion® (Tg de l'ordre de 100 °C), la compression peut être réalisée à une température comprise entre 100 °C et 140 °C, avantageusement à 140 °C et permet une bonne interface membrane-électrodes, sans affecter l'intégrité physique et thermique de la membrane.

Toutefois, généralement et selon un mode de réalisation privilégié de l'invention, la membrane et les électrodes

peuvent comprendre le même polymère. Dans ce cas de figure, la montée en température nécessaire à la réalisation de l'interface entraine une dégradation de la membrane.

La solution technique apportée dans le cadre de l'invention consiste à interposer une couche (appelée par la suite couche d'interface) à base d'un polymère conducteur protonique entre la membrane et l'électrode, ledit polymère conducteur protonique ayant une température de transition vitreuse inférieure ou égale, avantageusement inférieure à celle du polymère contenu dans la membrane. Ainsi, lors de l'assemblage et à condition de le réaliser à une température inférieure ou égale, avantageusement inférieure à la température de transition vitreuse du polymère constitutif de la membrane, il est possible de ramollir la couche d'interface et d'assurer sa pénétration dans l'électrode (de manière à assurer une bonne interface) sans affecter l'intégrité de la membrane.

Comme mentionné, la couche d'interface comprend un polymère conducteur protonique. Un polymère conducteur protonique est défini comme un polymère favorisant le déplacement de protons ($H^+$) à travers l'épaisseur des matériaux qu'ils composent. En effet et dans le cadre d'un AME, cette couche ne doit pas interférer avec la migration des protons de l'anode à la cathode à travers la membrane.

Comme décrit en relation avec le polymère conducteur protonique présent dans la membrane et les électrodes, le polymère (P4) possède avantageusement un groupe ionisé permettant le transport de charges, telles que des groupements sulfonates $SO_3^-$.

Selon un autre mode de réalisation particulier, ledit polymère comprend également des atomes de fluor (F). En d'autres termes, il s'agit de polymères fluorés.

Des polymères utilisables dans la couche d'interface selon l'invention sont en particulier les matériaux acide perfluorosulfoné ou acide sulfonique perfluoré (PFSA pour « *PerFluro Sulfonic Acid* »).

Tel que décrit dans Li et al. (Chem. Mater. 15 (2003) 4896), cette famille comprend différents polymères présentant une structure commune de formule :

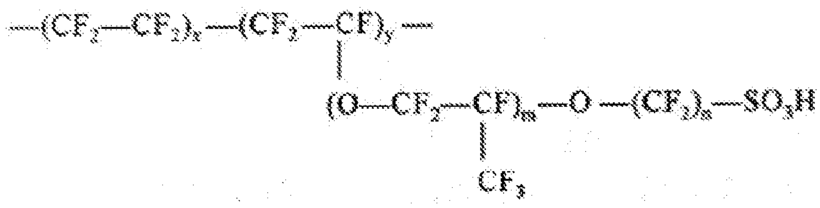

| Membrane | Structure | Producteur |
|---|---|---|
| Nafion® | m=1 ; n =2 : x=5-13.5 ; y=1 | DuPont de Nemours |
| Dow® | m=0 ; n =2 ; x=3.6-10 ; y=1 | Dow Chemicals |
| Aciplex® | m=0 ; n =2-5 ; x=1.5-14 ; y=1 | Asahi Chemicals |
| Flemion® | m=0,1 ; n =1-5 ; x=5-13.5 ; y=1 | Asahi Glass |

De manière connue, les polymères de type Nafion® présentent une Tg de l'ordre de 90-100°C.

De manière connue, les polymères de type Flemion® présentent une Tg de l'ordre de 120-125°C.

Par ailleurs, les polymères suivants peuvent être mis en oeuvre :

- un polymère de type Aquivion® (Solvay), avec une Tg de l'ordre de 140-150 °C et par exemple la structure suivante (k étant un nombre entier) :

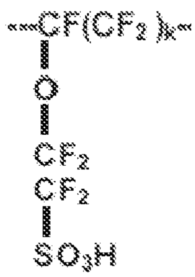

- un polymère de type ionomère 3M, avec une Tg de l'ordre de 125-130 °C et par exemple la structure suivante (k étant un nombre entier) :

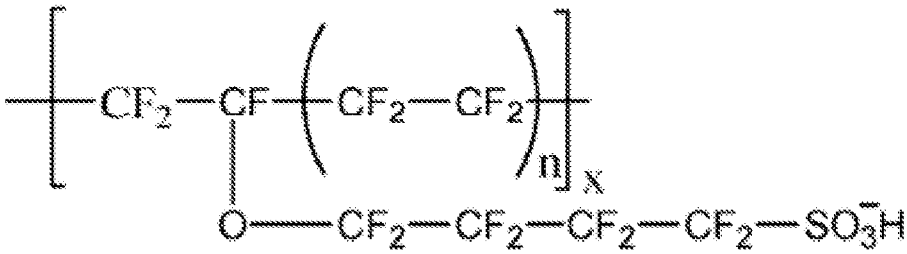

Selon un mode de réalisation particulier, la couche d'interface selon l'invention peut être uniquement constituée dudit polymère, voire d'un mélange de polymères, l'ensemble de ces polymères présentant les caractéristiques de conduction protonique et de température de transition vitreuse susmentionnées.

Plus généralement, la couche d'interface selon l'invention peut comprendre une ou plusieurs couches comprenant chacune des polymères conducteurs protoniques identiques ou différents présentant les caractéristiques de conduction protonique et de température de transition vitreuse susmentionnées.

Avantageusement, la couche d'interface selon l'invention est une couche continue.

De manière préférentielle, la couche d'interface selon l'invention présente une épaisseur inférieure à 10 micromètres, avantageusement comprise entre 1 et 5 micromètres, avantageusement égale à 2 micromètres. Comme il sera exposé ci-après en relation avec le procédé de fabrication selon l'invention, cette couche peut pénétrer dans l'épaisseur de l'électrode, notamment du fait de la compression.

Selon une caractéristique privilégiée de l'invention et comme déjà dit, le polymère conducteur protonique contenu dans la couche d'interface présente une température de transition vitreuse inférieure ou égale, avantageusement inférieure à celle du polymère contenu dans la membrane. Selon un mode de réalisation préféré, la différence de température est supérieure ou égale à 20 °C, avantageusement supérieure à 20 °C, voire supérieure ou égale à 40 °C.

Dans le cas particulier des PFSA, il est connu que la température de transition vitreuse est corrélée à la longueur de la chaîne latérale ou pendante. Ainsi et selon un mode de réalisation particulier, le polymère de la couche d'interface et le polymère de la membrane sont des PFSA, le polymère de la couche d'interface présentant une chaîne pendante plus longue que le polymère de la membrane. Encore plus avantageusement, le polymère des électrodes est également un PFSA dont la chaine pendante est plus courte que celle du polymère de la couche d'interface. Pour évaluer la « longueur », il peut être pris en compte le nombre total d'atomes constituant cette chaîne, ou éventuellement le nombre d'atomes de carbone de cette chaîne.

Au sens de l'invention, un ionomère perfluorosulfoné s'entend comme un polymère perfluoré porteur de fonctions acide sulfonique ou PFSA, comme défini plus haut.

A titre d'illustration et sur la base des polymères PFSA couramment utilisés dans le contexte des PEMFC, à savoir le Nafion® (Tg de l'ordre de 100 °C), l'Aquivion® (Tg de l'ordre de 140 °C) et le Flemion® (Tg de l'ordre de 125 °C), les combinaisons suivantes peuvent être envisagées :

- membrane = Aquivion®; couche d'interface = Aquivion®, avantageusement Flemion® ($\Delta T$ = 15 °C) encore plus avantageusement Nafion® ($\Delta T$ = 40 °C) ;
- membrane = Flemion®; couche d'interface = Flemion®, avantageusement Nafion® ($\Delta T$ = 25 °C) ;
- membrane = Nafion®; couche d'interface = Nafion®.

Comme déjà dit, l'assemblage sous presse chauffante est réellement problématique lorsque la température de transition vitreuse du polymère de la membrane est inférieure ou égale, souvent égale à celle du polymère des électrodes.

Ainsi et selon un autre mode de réalisation particulier, la température de transition vitreuse du polymère conducteur protonique contenu dans la couche d'interface est inférieure ou égale à celle du polymère conducteur protonique contenu dans la ou les électrodes. Selon un mode de réalisation préféré, la différence de température est supérieure ou égale à 20°C, avantageusement supérieure à 20 °C, voire supérieure ou égale à 40 °C.

A titre d'illustration et sur la base des polymères PFSA couramment utilisés dans le contexte des PEMFC, à savoir le Nafion® (Tg de l'ordre de 100°C), l'Aquivion® (Tg de l'ordre de 140 °C) et le Flemion® (Tg de l'ordre de 125 °C), les combinaisons suivantes peuvent être envisagées :

- membrane = Aquivion®; couche d'interface = Flemion® ($\Delta T$ = 15 °C), avantageusement Nafion® ($\Delta T$ = 40°C) ;

Electrodes = Aquivion® ou Flemion®;

- membrane = Flemion®; couche d'interface = Nafion® (ΔT = 25°C) ; Electrodes = Flemion®;
- membrane = Flemion®; couche d'interface = Flemion®, avantageusement Nafion® (ΔT = 25°C) ; Electrodes = Aquivion®;
- membrane = Nafion®; couche d'interface = Nafion® ; Electrodes = Flemion®, ou Aquivion®.

Ainsi et selon un mode de réalisation particulier, le polymère de la couche d'interface selon l'invention présente une température de transition vitreuse de l'ordre de 90 à 100 °C et le polymère de la membrane, et éventuellement le polymère des électrodes, présente une température de transition vitreuse de l'ordre de 140 à 150 °C.

Dans un cas particulier, la membrane et avantageusement les électrodes comprennent un polymère de type Aquivion®, par exemple de structure :

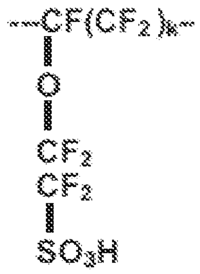

Dans ce contexte, un ionomère particulièrement adapté est un copolymère de tétrafluoroéthylène et de Sulfonyl Fluoride Vinyl, par exemple commercialisé sous le nom d'Aquivion® (Solvay), notamment sous le numéro CAS 111173-25-2.

Par ailleurs, la couche présente à l'interface de la membrane et d'au moins une électrode, avantageusement des deux électrodes, comprend un polymère de type Nafion®, par exemple de structure :

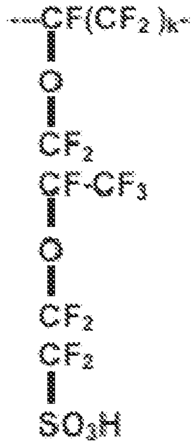

Dans ce contexte, un ionomère particulièrement adapté est un dérivé tétrafluoroéthylène sulfoné, par exemple commercialisé sous le nom de Nafoon® (Dupont). A titre d'exemple, le produit Nafoon® D2020 possédant un numéro CAS 31175-20-9 peut être mis en oeuvre dans le cadre de la présente invention mais il en existe d'autres, comme par exemple le Nafion® D520. Il s'agit avantageusement de dispersions en phase eau/alcool.

De manière classique, la membrane comprend exclusivement du polymère conducteur protonique et a une épaisseur comprise entre 5 et 100 micromètres, avantageusement de l'ordre de 20 micromètres.

Dans le cadre de l'invention, l'AME comprend également une couche active ou couche catalytique comprenant le catalyseur. La couche active ou catalytique sert d'électrode, aussi bien de cathode que d'anode.

De manière avantageuse, le catalyseur est du platine. En outre, le catalyseur se présente avantageusement sous forme de particules, voire de nanoparticules, notamment de platine.

Selon un autre mode de réalisation privilégié, le catalyseur est supporté sur du carbone ou des agrégats de carbone. Le catalyseur peut donc être du carbone platiné.

Une couche active dans l'AME selon l'invention comprend un catalyseur, avantageusement des nanoparticules de platine sur un support carboné, typiquement constituées de 50% de carbone et de 50% de platine (% massiques

dans la couche catalytique sèche). De manière classique et à titre d'exemple, la couche active peut être constituée de 66% à 88% en poids sec de catalyseur, avantageusement 72%, et de 22% à 34% en poids sec de polymère(s) conducteur(s) protonique(s), avantageusement 28%

De manière avantageuse, la couche catalytique peut être obtenue par dépôt d'une encre catalytique, notamment sur la couche de diffusion des gaz (GDL).

De manière classique, l'encre catalytique comprend, outre le(s) polymère(s) conducteur(s) protonique(s) et le catalyseur, avantageusement des nanoparticules de platine sur un support carboné, un solvant ou liquide porteur.

De manière connue de l'homme du métier, le dépôt d'une telle encre catalytique peut être réalisé par des méthodes d'impression telles que l'enduction, la pulvérisation, le jet d'encre, ou la sérigraphie.

Une telle couche active ou catalytique, jouant le rôle d'électrodes dans l'AME selon l'invention, présente avantageusement une épaisseur de l'ordre de 10 micromètres et une masse comprise entre 0,2 à 4mg/cm$^2$, par exemple 1,2 mg/cm$^2$.

Selon un mode de réalisation, le rapport entre l'épaisseur de la couche d'interface et la membrane est comprise entre 5 et 20%, avantageusement de l'ordre de 10%.

Un AME selon l'invention peut être utilisé dans l'élaboration de dispositifs électrochimiques, comme des piles à combustible et plus particulièrement les piles à combustible à membrane échangeuse de protons (PEMFC).

Un AME selon l'invention peut servir à l'élaboration d'une électrode électrochimique, comprenant de manière avantageuse une couche de diffusion des gaz (GDL), généralement en fibres de carbone, disposée de part et d'autre de la couche active.

Ainsi, la présente invention vise également des dispositifs électrochimiques comprenant un AME selon l'invention. Parmi les dispositifs électrochimiques visés figurent, en tout premier lieu, les piles à combustible et plus particulièrement les piles à combustible à membrane échangeuse de protons (PEMFC). De telles piles peuvent être constituées de cellules électrochimiques montées en « stack ».

Comme démontré dans le cadre de la présente demande, un AME selon l'invention permet d'améliorer les propriétés d'une pile à combustible de type PEMFC.

Dans le cadre de l'invention, on entend par « propriétés » aussi bien les performances que la durabilité.

Dans le cadre de l'invention, les performances électrochimiques d'une cellule comprenant un AME selon l'invention se mesurent en suivant la tension délivrée en fonction du courant. Ce test est généralement mis en oeuvre dans les conditions souhaitables dans le domaine de l'automobile (Température : 80 °C ; 50% d'humidité relative ; Pression : 1,5bar) mais peuvent être adaptées aux conditions de fonctionnement envisagées pour le dispositif électrochimique en présence. En particulier et dans le cadre de l'invention, il a été observé des performances améliorées en conditions noyantes (Température : 80 °C ; 100% d'humidité relative; Pression: 1,5bar), indiquant une meilleure gestion de l'eau produite par la pile.

Un effet positif sur la durabilité des dispositifs électrochimiques selon l'invention est également attendu.

Selon un autre aspect, la présente invention concerne un procédé de fabrication d'un AME tel que défini cidessus. Un tel procédé comprend avantageusement les étapes suivantes :

- dépôt sur au moins l'une des faces de la membrane et/ou des électrodes, d'une couche contenant un polymère conducteur protonique ;
- assemblage de la membrane et des électrodes ;
- élévation de la température de l'assemblage à une température supérieure ou égale à la température de transition vitreuse du polymère de la couche mais inférieure ou égale à la température de transition vitreuse du polymère de la membrane ;
- éventuellement mise sous pression de l'assemblage.

La première étape consiste donc à déposer la couche qui servira de couche d'interface entre la membrane et l'électrode.

Cette couche peut être déposée sur :

- une face de la membrane ;
- les deux faces de la membrane ;
- une face d'une électrode ;
- une face de chacune des deux électrodes.

De manière avantageuse, le dépôt est réalisé sur une face de chacune des deux électrodes.

Selon un mode de réalisation particulier et au préalable, l'électrode est déposée sur une couche de diffusion des gaz. L'encre catalytique servant à ce dépôt comprend avantageusement :

- un catalyseur, avantageusement des nanoparticules de platine sur un support carboné, typiquement constituées de 50% de carbone et de 50% de platine (% massiques dans la couche catalytique sèche) ;
- au moins un ionomère tel que défini ci-dessus en termes notamment de température de transition vitreuse ; et
- un solvant ou liquide porteur.

De manière connue de l'homme du métier, le dépôt d'une telle encre catalytique peut être réalisé par des méthodes d'impression telles que l'enduction, la pulvérisation, le jet d'encre, ou la sérigraphie.

De manière classique et à titre d'exemple, la couche active obtenue sur la GDL après séchage est constituée de 66% à 88% en poids sec de catalyseur, avantageusement 72%, et de 22% à 34% en poids sec de polymère(s) conducteur(s) protonique(s), avantageusement 28%

Une telle couche active ou catalytique, jouant le rôle d'électrodes dans l'AME selon l'invention, présente avantageusement une épaisseur comprise entre 2 et 20 micromètres, par exemple de l'ordre de 10 micromètres, et une masse comprise entre 0,2 à 4 mg/cm$^2$, par exemple de l'ordre de 3 mg/cm$^2$.

Selon un autre mode de réalisation particulier, avant l'assemblage et avantageusement avant le dépôt de la couche d'interface, les électrodes sont soumises à un traitement thermique, avantageusement à une température supérieure ou égale à la température de transition vitreuse du polymère contenu dans ces électrodes. La différence entre ces températures est avantageusement supérieure ou égale à 20 °C, voire supérieure ou égale à 40 °C.

Ainsi et à titre d'exemple, lorsque les électrodes contiennent de l'Aquivion® présentant une température de transition vitreuse de l'ordre de 140 à 150 °C, elles sont soumises à un traitement thermique à une température supérieure à 140 °C, avantageusement de l'ordre de 180 °C. Un tel traitement peut durer de plusieurs minutes à plusieurs heures, typiquement 30 minutes.

Le dépôt de la couche d'interface est avantageusement réalisé par les techniques classiques de pulvérisation, d'enduction ou de sérigraphie. Un procédé de pulvérisation est avantageusement mis en oeuvre.

Avantageusement, il est mis en oeuvre une dispersion comprenant le polymère conducteur protonique aux propriétés recherchées. Encore plus avantageusement, il s'agit d'une dispersion aqueuse.

De manière avantageuse, l'épaisseur de la couche d'interface doit être comprise entre 1 et 5 micromètres, soit une masse de polymère comprise entre 0,2 et 1 mg.

Le rapport entre l'épaisseur de la couche d'interface et la couche active est avantageusement compris entre 5 et 20%, par exemple de l'ordre de 10%.

La seconde étape du procédé selon l'invention consiste à mettre en regard puis en contact la face de la membrane et la face de l'électrode de sorte que la couche déposée sur la membrane ou sur l'électrode soit à l'interface membrane/électrode et puisse ainsi servir de couche de liaison.

L'empilement ainsi obtenu peut donc correspondre aux cas suivants :

Anode - couche - membrane - Cathode ;
Anode - membrane - couche - cathode ;
Et avantageusement Anode - couche - membrane - couche - cathode.

Comme déjà dit, l'empilement peut également comprendre des GDL de part et d'autre des électrodes.

L'étape suivante consiste à porter l'empilement ou assemblage décrit ci-dessus à une température supérieure ou égale à la température de transition vitreuse du polymère de la couche, mais inférieure ou égale à la température de transition vitreuse du polymère de la membrane, voire de celui de l'électrode.

Pour favoriser l'interface, la température doit être aussi élevée que possible sans toutefois affecter l'intégrité de la membrane et donc au maximum égale à la température de transition vitreuse du polymère contenu dans la membrane. Au minimum, elle doit être égale à la température de transition vitreuse du polymère contenu dans la couche d'interface.

En pratique et dans le cas où les électrodes et la membrane contiennent de l'Aquivion® et que la couche d'interface est en Nation®, l'empilement doit être soumis à un traitement thermique à une température comprise entre 90-100 °C (Tg du Nation®) et 140-150 °C (Tg de l'Aquivion®), avantageusement à 140 °C.

Un tel traitement thermique est appliqué pendant une durée comprise entre 10 et 300 s, par exemple pendant 3 minutes. Cette durée peut dépendre des polymères en présence, des épaisseurs des couches en présence, de la température appliquée ...

De manière simultanée ou postérieure, une pression est avantageusement exercée sur l'empilement ou l'assemblage, afin de favoriser la pénétration de la couche d'interface dans la ou les électrodes. Une pression comprise entre 1 et 5 MPa, par exemple égale à 3,5 MPa, est avantageusement exercée pendant une durée pouvant aller de 1 seconde à plusieurs minutes, par exemple 3 minutes.

En pratique, le traitement thermique et la mise sous pression sont avantageusement réalisés dans une presse chauffante.

Outre le fait d'assurer la liaison entre membrane et électrodes, la couche d'interface permet donc de préserver l'intégrité physique et thermique de la membrane.

BREVE DESCRIPTION DES FIGURES

La manière dont l'invention peut être réalisée et les avantages qui en découlent ressortiront mieux de l'exemple de réalisation qui suit, donné à titre indicatif et non limitatif, à l'appui des figures annexées parmi lesquelles :

La figure 1 représente le schéma du principe de fonctionnement d'une pile à combustible de type PEMFC.
La figure 2 représente un AME selon l'invention.
La figure 3 compare les performances d'un dispositif selon l'invention et un dispositif selon l'art antérieur en conditions automobile (A) et en conditions noyantes (B).

**EXEMPLES DE REALISATION :**

La présente invention va être illustrée plus avant en rapport avec un mode de réalisation particulier, à savoir un AME comprenant :

- une membrane (3) de type Aquivion® ;

Pour rappel, l'Aquivion®, par exemple commercialisé par Solvay, présente une température de transition vitreuse, notée Tg, de l'ordre de 140 à 150°C et la structure suivante (avec k un nombre entier) :

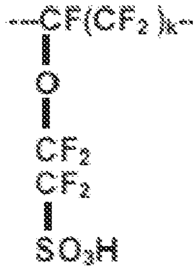

- une anode et une cathode (2) comprenant également de l'Aquivion®.

Les électrodes contiennent typiquement :

1/ 72% de catalyseur de type platine dispersé sur un support carboné, par exemple du noir de carbone. L'ensemble est constitué de 50% de platine et de 50% de carbone ;
2/ 28% d'ionomère, en l'occurrence de l'Aquivion®.

Les % s'entendent comme des pourcentages massiques dans la couche catalytique sèche.

- une couche (**4**) à base de Nafion® ;

Pour rappel, le Nafion®, par exemple commercialisé par Dupont, présente une température de transition vitreuse, notée Tg, de l'ordre de 90-100 °C et la structure suivante (avec k un nombre entier) :

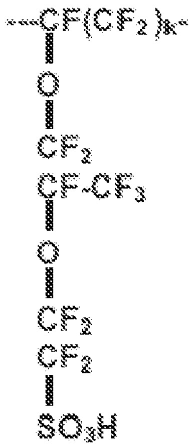

**<u>1/ Elaboration du dispositif selon l'invention</u>** :

A/Formation des électrodes :

La première étape consiste à préparer une encre catalytique comprenant le polymère, en l'occurrence l'Aquivion®, et le support carboné dans un solvant. Une encre catalytique à base aqueuse est donc préparée afin d'obtenir les concentrations susmentionnées. Suivant le procédé de fabrication, l'extrait sec varie de 1 à 20%. Un traitement thermique permet de sécher l'encre déposée.

Ainsi, la seconde étape est la fabrication des électrodes **(2)** par dépôt de l'encre sur les couches de diffusion des gaz **(5),** typiquement réalisées par enduction (ou jet d'encre, sérigraphie, pulvérisation), formant ainsi la GDE.

La GDE ainsi formée, à base d'Aquivion®, présentant une Tg de 140-150 °C, est alors soumise à un traitement thermique à 180 °C pendant 30 minutes afin que les particules d'ionomère coalescent, ce qui favorise la formation de zones de triple contact nécessaire à un bon fonctionnement catalytique. A noter que cette étape est inutile dans le procédé de fabrication d'un assemblage classique, dans la mesure où ce traitement à haute température est réalisé au moment de l'assemblage des électrodes avec la membrane.

Les électrodes **(2)** ainsi formées présentent typiquement une épaisseur de l'ordre de 10 μm avec une masse de l'ordre de 3 mg/$cm^2$.

B/ Formation de la couche d'interface :

L'étape suivante consiste à déposer la couche d'interface **(4)** sur au moins l'une des électrodes **(2),** avantageusement sur les deux électrodes.

Selon l'invention, cette couche est constituée d'un ionomère présentant une température de transition vitreuse inférieure d'au moins 20 °C à celui contenu dans la membrane et en l'occurrence dans les électrodes (Aquivion® présentant une Tg de 140-150 °C). L'ionomère choisi pour la réalisation de la couche d'interface **(4)** est un ionomère de la gamme Nafion® du fabricant Dupont se présentant avantageusement sous forme d'une dispersion en phase aqueuse. Ainsi, les dispersions en phase eau/alcool Nafion D2020 et Nafion D520 peuvent être utilisées pour réaliser cette couche.

En pratique, cette dispersion est déposée sur la face « libre » de l'électrode, c'est-à-dire sur la face qui n'est pas en contact avec la GDL **(5)** et qui sera la face mise en regard avec la membrane **(3).** Le dépôt peut être réalisé par différentes techniques classiques telles que pulvérisation, enduction ou sérigraphie. En pratique, un procédé de pulvérisation est avantageusement mis en oeuvre.

L'épaisseur d'interface est typiquement comprise entre 1 et 5 micromètres, avantageusement 2 micromètres. En pratique, au cours du dépôt et du séchage, l'ionomère de la couche d'interface pénètre dans la couche active.

L'épaisseur d'interface doit être comprise entre 1 et 5 μm, soit une masse comprise entre 0,2 et 1 mg. La suspension Nafion D2020 ayant un extrait sec de 22%, la masse mouillée à déposer est donc comprise entre 0,908 et 4,540 mg, par $cm^2$ de couche active.

C/ Assemblage :

La face de l'électrode comprenant la couche d'interface est alors mise en regard avec la membrane **(3)** en Aquivion® de sorte à former l'assemblage.

La compression de l'assemblage est réalisée dans une presse à chaud dans les conditions suivantes :

- à une température supérieure à la Tg du polymère de la couche d'interface **4** (90-100°C) mais inférieure à celle des polymères constitutifs des électrodes **(2)** et de la membrane **(3)** (140-150 °C). Selon une autre contrainte, pour assurer une bonne interface membrane-électrodes, il faut avantageusement assembler à une température supérieure de 40 °C à la température de transition vitreuse du polymère en présence. Dans le cas d'espèce, il faut donc appliquer une température comprise entre 100°C et 140 °C, avantageusement supérieure à 120 °C, voire juste inférieure à 140 °C ;
- à une pression typiquement comprise entre 1 et 5MPa, par exemple 3,5MPa ;
- pendant une durée pouvant aller de quelques secondes à quelques minutes, par exemple 3 minutes.

A l'issue de l'assemblage, l'empilement présente une structure telle que schématisée à la Figure 2. Une telle structure (hors GDL), sèche et finie, a typiquement une épaisseur comprise entre 20 et 50 micromètres.

**2/ Performances du dispositif selon l'invention** :

L'AME ainsi obtenu est monté dans une monocellule pour tester les performances. La monocellule est équipée de plaques monopolaires permettant l'arrivée des gaz, de plaques collectrices de courant et de plaques de serrage.
Les performances du dispositif selon l'invention ont été comparées à un AME de référence (constitué de Nafion® compressé à 135°C), dans deux conditions distinctes :

- dans des conditions proches de celles recommandées pour une utilisation automobile : température de fonctionnement = 80 °C ; humidité relative = 50%; pression des gaz = 1,5 bar.
- dans des conditions noyantes : température de fonctionnement = 80 °C ; humidité relative = 100% ; pression des gaz = 1,5 bar.

Les résultats, présentés à la figure 3, correspondent à une courbe tension-densité de courant représentative des performances de la pile. Le gain en termes de performance est particulièrement important dans les conditions noyantes. Ainsi, l'optimisation de l'interface membrane-électrodes dans un AME compressé, tel que proposé dans le cadre de l'invention, permet une meilleure gestion de l'eau produite par la pile.
Il est également attendu une amélioration de la durabilité des piles.

## Revendications

1. Assemblage membrane-électrodes (AME) comprenant une membrane **(3)** et deux électrodes **(2),** ledit assemblage comprenant en outre au moins une couche **(4),** située à l'interface de la membrane et d'une électrode, dans lequel :

   - la membrane **(3)** et les électrodes **(2)** contiennent le même polymère conducteur protonique ;
   - ladite couche **(4)** contient un polymère conducteur protonique qui présente une température de transition vitreuse inférieure à celle du polymère conducteur protonique contenu dans la membrane **(3)** et dans les électrodes **(2) caractérisé en ce que**
   - les polymères conducteurs protoniques contenus dans la membrane **(3)** et les électrodes **(2)** et dans la couche **(4)** sont des ionomères perfluorosulfonés (PFSA).

2. Assemblage membrane-électrodes (AME) selon la revendication 1, ***caractérisé*** **en ce que** le polymère de la couche **(4)** présente une chaîne pendante plus longue que le polymère de la membrane **(3)** et des électrodes **(2).**

3. Assemblage membrane-électrodes (AME) selon l'une des revendications précédentes, ***caractérisé*** **en ce que** la différence entre les températures de transition vitreuse du polymère de la couche **(4)** et du polymère de la membrane **(3)** et des électrodes **(2)** est supérieure ou égale à 20°C, avantageusement supérieure à 20°C.

4. Assemblage membrane-électrodes (AME) selon la revendication 3, ***caractérisé*** **en ce que** le polymère de la couche **(4)** présente une température de transition vitreuse de l'ordre de 100°C et le polymère de la membrane **(3)** et des électrodes **(2)** présente une température de transition vitreuse de l'ordre de 140°C.

5. Assemblage membrane-électrodes (AME) selon l'une des revendications précédentes, ***caractérisé*** **en ce que** le polymère de la couche (4) présente la structure suivante :

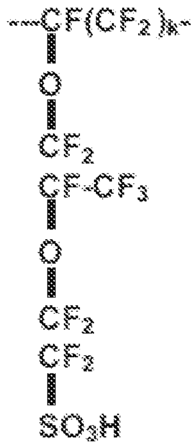

et le polymère de la membrane (3) et des électrodes (2) présente la structure suivante :

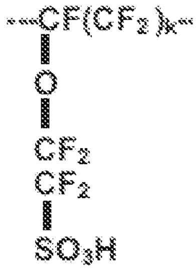

6. Assemblage membrane-électrodes (AME) selon l'une des revendications précédentes, ***caractérisé*** **en ce que** la couche **(4)** présente une épaisseur comprise entre 1 et 5 micromètres, avantageusement égale à 2 micromètres.

7. Pile à combustible (PEMFC) comprenant un assemblage membrane-électrodes (AME) selon l'une des revendications 1 à 6.

8. Procédé de fabrication d'un assemblage membrane-électrodes (AME) selon l'une des revendications 1 à 6 comprenant les étapes suivantes :

   - dépôt sur au moins l'une des faces de la membrane **(3)** et/ou des électrodes **(2),** d'une couche **(4)** contenant un polymère conducteur protonique ;
   - assemblage de la membrane et des électrodes ;
   - élévation de la température de l'assemblage à une température supérieure ou égale à la température de transition vitreuse du polymère de la couche **(4)** mais inférieure ou égale à la température de transition vitreuse du polymère de la membrane **(3)** et des électrodes **(2)** ;
   - éventuellement mise sous pression de l'assemblage.

9. Procédé de fabrication d'un assemblage membrane-électrodes (AME) selon la revendication 8, ***caractérisé*** **en ce que** la couche **(4)** est déposée sur l'une des faces des deux électrodes **(2),** l'assemblage étant réalisé par mise en regard de la couche déposée sur les électrodes et de la membrane **(3).**

10. Procédé de fabrication d'un assemblage membrane-électrodes (AME) selon la revendication 8 ou 9, ***caractérisé*** **en ce que**, avant l'assemblage, avantageusement avant le dépôt de la couche **(4),** les électrodes **(2)** sont soumises à un traitement thermique, avantageusement à une température supérieure ou égale à la température de transition vitreuse du polymère contenu dans les électrodes.

**Patentansprüche**

1. Eine Membranelektrodenanordnung (MEA) mit einer Membran (3) und zwei Elektroden (2), wobei diese Einheit

außerdem mindestens eine Schicht (4) umfasst, die sich an der Grenzfläche der Membran und einer Elektrode befindet, in der:

- die Membran (3) und die Elektroden (2) dasselbe protonenleitfähige Polymer enthalten;
- diese Schicht (4) ein protonenleitfähiges Polymer enthält, das eine Glasübergangstemperatur aufweist, die niedriger ist, als die des in der Membran (3) und den Elektroden (2) enthaltenen protonenleitfähigen Polymers, ***dadurch gekennzeichnet, dass***
- es sich bei den in der Membran (3), den Elektroden (2) und der Schicht (4) enthaltenen protonenleitfähigen Polymeren um perfluorsulfonierte Ionomere (PFSA) handelt.

**2.** Membranelektrodenanordnung (MEA) gemäß Anspruch 1, ***dadurch gekennzeichnet, dass*** das Polymer der Schicht (4) eine endständige Kette aufweist, die länger ist, als das Polymer der Membran (3) und der Elektroden (2).

**3.** Membranelektrodenanordnung (MEA) gemäß einem der vorangehenden Ansprüche, ***dadurch gekennzeichnet, dass*** die Differenz zwischen den Glasübergangstemperaturen des Polymers der Schicht (4) und des Polymers der Membran (3) und der Elektroden (2) höher oder gleich 20°C ist, vorteilhafterweise höher als 20°C.

**4.** Membranelektrodenanordnung (MEA) gemäß Anspruch 3, ***dadurch gekennzeichnet, dass*** das Polymer der Schicht (4) eine Glasübergangstemperatur in einer Größenordnung von 100°C aufweist und das Polymer der Membran (3) und der Elektroden (2) eine Glasübergangstemperatur in einer Größenordnung von 140°C aufweist.

**5.** Membranelektrodenanordnung (MEA) gemäß einem der vorangehenden Ansprüche, ***dadurch gekennzeichnet, dass*** das Polymer der Schicht (4) die folgende Struktur aufweist:

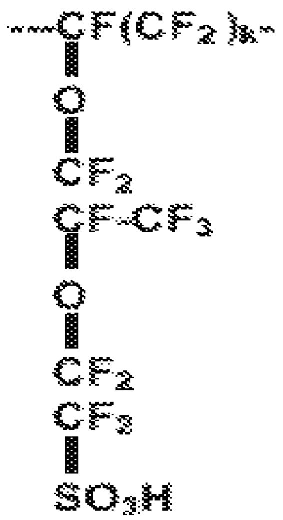

und das Polymer der Membran (3) und der Elektroden (2) die folgende Struktur aufweist:

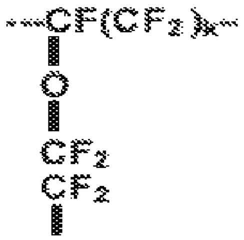

**6.** Membranelektrodenanordnung (MEA) gemäß einem der vorangehenden Ansprüche, ***dadurch gekennzeichnet, dass*** die Schicht (4) eine Dicke zwischen 1 und 4 Mikrometern aufweist, vorzugsweise gleich 2 Mikrometern.

**7.** Brennstoffzelle (PEMFC) mit einer Membranelektrodenanordnung (MEA) gemäß einem der Ansprüche 1 bis 6.

**8.** verfahren zur Herstellung einer Membranelektrodenanordnung (MEA) gemäß einem der Ansprüche 1 bis 6, die die folgenden Schritte umfasst:

- Abscheidung auf mindestens einer Seite der Membran (3) und/oder der Elektroden (2) einer Schicht (4), die ein protonenleitfähiges Polymer enthält;
- Zusammenfügen der Membran und der Elektroden;
- Erhöhung der Temperatur der Anordnung auf eine Temperatur höher oder gleich der Glasübergangstemperatur des Polymers der Schicht (4), aber kleiner oder gleich der Glasübergangstemperatur des Polymers der Membran (3) und der Elektroden (2) ;
- eventuell unter Druck setzen der Anordnung.

**9.** Verfahren zur Herstellung einer Membranelektrodenanordnung (MEA) gemäß Anspruch 8, ***dadurch gekennzeichnet, dass*** die Schicht (4) auf einer der beiden Seiten der beiden Elektroden (2) abgeschieden wird, wobei die Anordnung durch Gegenüberstellen der auf den Elektroden und der Membran (3) abgeschiedenen Schicht hergestellt wird.

**10.** Verfahren zur Herstellung einer Membranelektrodenanordnung (MEA) gemäß Anspruch 8 oder 9, ***dadurch gekennzeichnet, dass*** vor der Anordnung, vorzugsweise vor dem Abscheiden der Schicht (4) die Elektroden (2) einer Wärmebehandlung unterzogen werden, vorteilhafterweise bei einer Temperatur höher oder gleich der Glasübergangstemperatur des in den Elektroden enthaltenen Polymers.

## Claims

**1.** A membrane-electrode assembly (MEA) comprising a membrane **(3)** and two electrodes **(2),** said assembly further comprising at least one layer **(4)** located at the interface of the membrane and of an electrode, wherein:

- the membrane **(3)** and the electrodes **(2)** contain the same proton conductive polymer;
- said layer **(4)** contains a proton conductive polymer which has a glass transition temperature lower than that of the proton conductive polymer contained in the membrane **(3)** and in the electrodes **(2);**

***characterized* in that** the proton conductive polymers contained in the membrane **(3)** and the electrodes **(2)** and in the layer **(4)** are perfluorosulfonated ionomers (PFSA).

**2.** The membrane-electrode assembly (MEA) of claim 1, ***characterized* in that** the polymer of the layer **(4)** has a longer dangling chain than the polymer of the membrane **(3)** and of the electrodes **(2).**

**3.** The membrane-electrode assembly (MEA) of any of the foregoing claims, ***characterized* in that** the difference between the glass transition temperatures of the polymer of the layer **(4)** and of the polymer of the membrane **(3)** and of the electrodes **(2)** is greater than or equal to 20°C, advantageously greater than 20°C.

**4.** The membrane-electrode assembly (MEA) of claim 3, ***characterized* in that** the polymer of the layer **(4)** has a glass transition temperature in the order of 100°C and the polymer of the membrane **(3)** and of the electrodes **(2)** has a glass transition temperature in the order of 140°C.

**5.** The membrane-electrode assembly (MEA) of any of the foregoing claims, ***characterized* in that** the polymer of the layer **(4)** has the following structure:

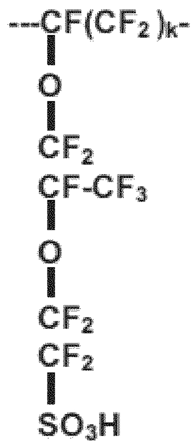

and the polymer of the membrane (3) and of the electrodes (2) has the following structure:

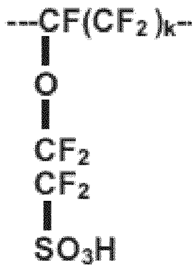

6. The membrane-electrode assembly (MEA) of any of the foregoing claims, ***characterized* in that** the layer (4) has a thickness in the range from 1 to 5 micrometers, advantageously equal to 2 micrometers.

7. A fuel cell (PEMFC) comprising the membrane-electrode assembly (MEA) of any of claims 1 to 6.

8. A method of manufacturing the membrane-electrode assembly (MEA) of any of claims 1 to 6, comprising the steps of:

   - depositing on at least one of the surfaces of the membrane **(3)** and/or of the electrodes **(2)** a layer **(4)** containing a proton conductive polymer;
   - assembling the membrane and the electrodes;
   - raising the temperature of the assembly to a temperature higher than or equal to the glass transition temperature of the polymer of the layer **(4)** but lower than or equal to the glass transition temperature of the polymer of the membrane **(3)** and of the electrodes **(2);**
   - possibly pressurizing the assembly.

9. The membrane-electrode assembly (MEA) manufacturing method of claim 8, ***characterized* in that** the layer **(4)** is deposited on one of the surfaces of the two electrodes **(2),** the assembly being formed by placing opposite each other the layer deposited on the electrodes and the membrane **(3).**

10. The membrane-electrode assembly (MEA) manufacturing method of claim 8 or 9, ***characterized* in that**, before the assembly, advantageously before the deposition of the layer **(4),** the electrodes **(2)** are submitted to a thermal treatment, advantageously at a temperature higher than or equal to the glass transition temperature of the polymer contained in the electrodes.

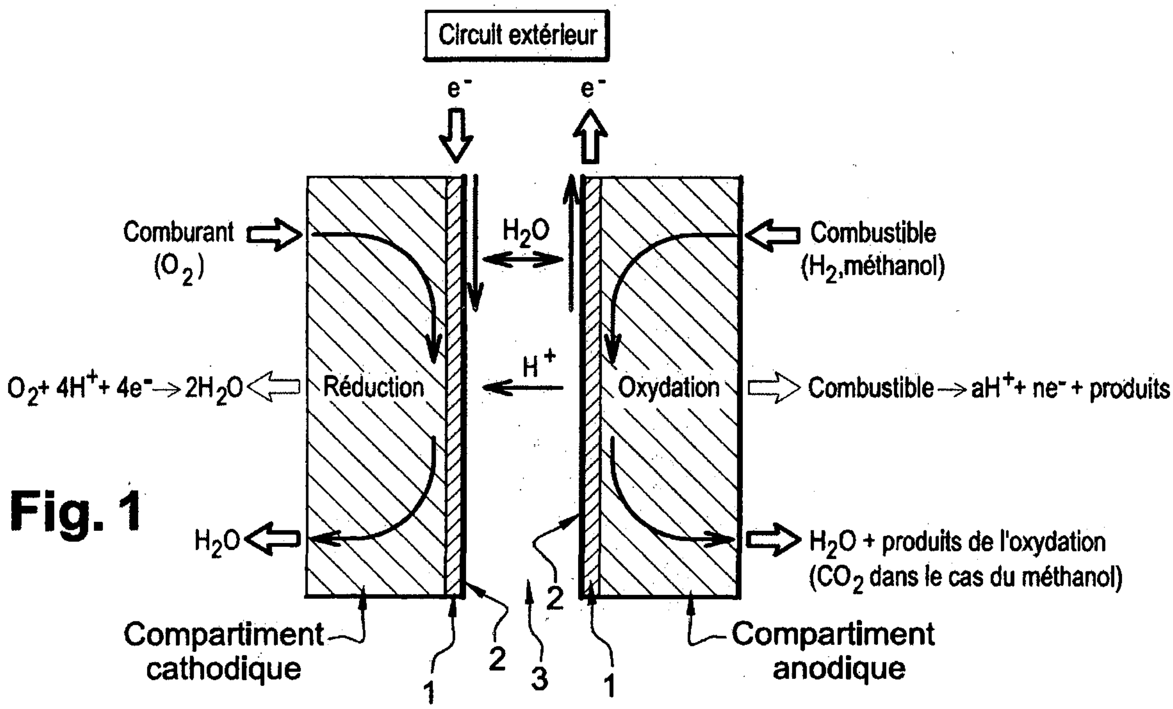

Circuit extérieur
e-
e-
Comburant
($O_2$)
$H_2O$
Combustible
($H_2$,méthanol)
$O_2$+ $4H^+$+ $4e^-$-> $2H_2O$
Réduction
$H^+$
Oxydation
Combustible-> $aH^+$+ $ne^-$ + produits
$H_2O$
$H_2O$ + produits de l'oxydation
($CO_2$ dans le cas du méthanol)
Compartiment cathodique
1
2
3
2
1
Compartiment anodique


Fig. 1

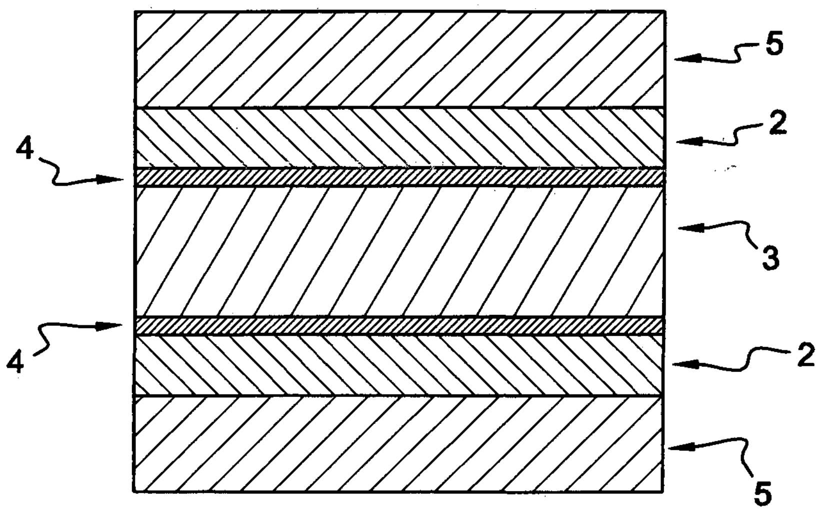

5
2
4
3
4
2
5


Fig. 2

A/

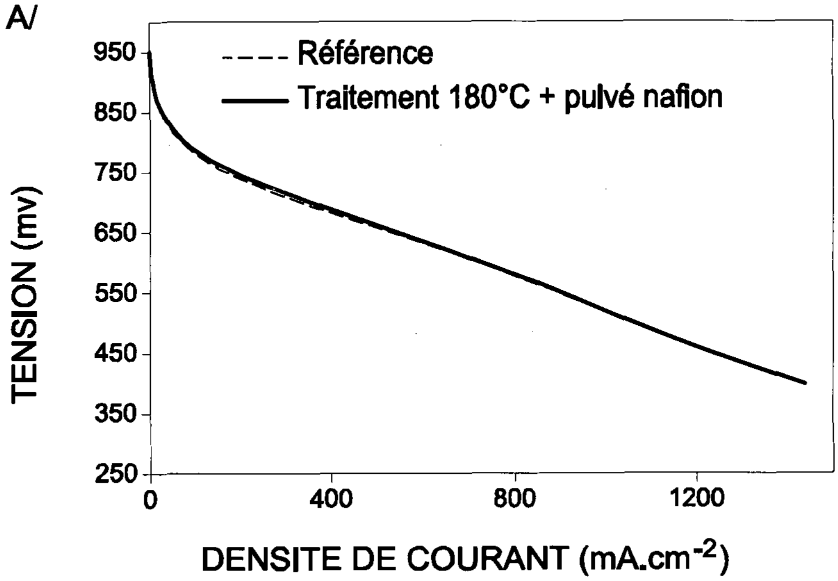
Référence
Traitement 180°C + pulvé nafion
TENSION (mv)
950
850
750
650
550
450
350
250
0
400
800
1200
DENSITE DE COURANT (mA.cm-2)

B/

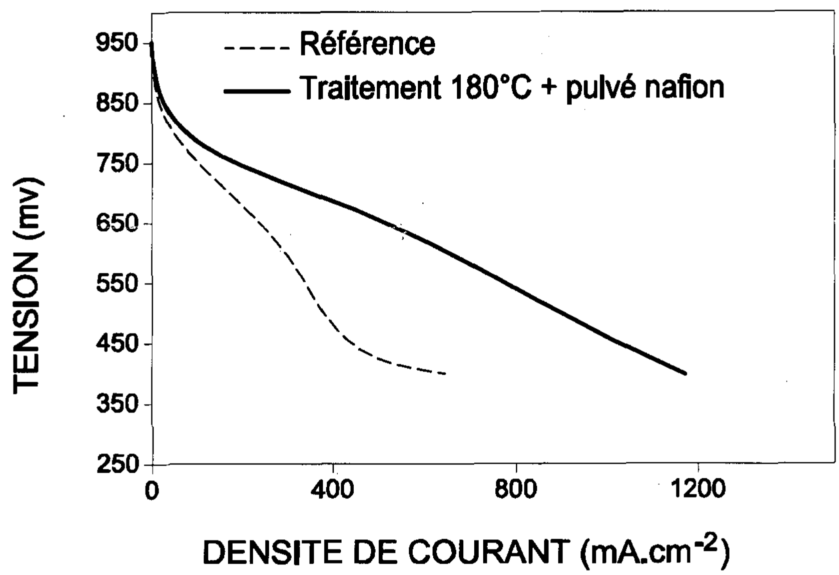
Référence
Traitement 180°C + pulvé nafion
TENSION (mv)
950
850
750
650
550
450
350
250
0
400
800
1200
DENSITE DE COURANT (mA.cm-2)

**Fig. 3**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- US 20130130133 A
- US 20110097642 A
- EP 2463866 A
- KR 20130017496
- EP 2618414 A


### Littérature non-brevet citée dans la description


- Electrochemical Science and Technology. *J. Electrochem. Soc.,* 1988, vol. 135 (9), 2209
- *Effects of MEA fabrication method on durability of polymer electrolyte membrane fuel cells,* 30 Juin 2008, vol. 53 (16), 5434-5441
- **LI et al.** *Chem. Mater.,* 2003, vol. 15, 4896